# EUROPEAN PATENT APPLICATION

(11) **EP 0 792 911 A2**
(43) Date of publication of application: **03.09.1997**
(21) Application number: 97200551.6
(22) Date of filing: 26.02.1997
(51) Int. Cl.: C08K 5/3435, C08K 5/521, C08L 23/02

(54) **Flame resistant polyolefin compositions**

(30) Priority: 27.02.1996 US 607742
(71) Applicant: FMC CORPORATION, Philadelphia, PA 19103 (US)
(72) Inventor: Tennesen, Charles A., Bristol, Pennsylvania 19103 (US)
(74) Representative: Hamilton, Raymond

(57) **Abstract**

Polyolefins are flame retarded by the addition of at least one tris(trihaloneopentyl) phosphate flame retardant and at least one alkoxyamine functional hindered amine light stabilizer. The light stabilizer unexpectedly enhances the flame retardancy afforded by the phosphate.

## Description

### TECHNICAL FIELD

This invention relates to flame resistant polyolefin compositions, to processes for their production and to methods for improving the flame resistance of polyolefins.

### BACKGROUND ART

Polyolefins such as polypropylene and copolymers of polypropylene find use in a wide variety of applications. In many of these, it is preferred or mandatory to incorporate an additive into the polyolefin which improves its flame resistance (retardance). A number of effective flame retardants are known but all suffer from the disadvantage that their incorporation detracts from the product's physical properties, may cause problems in processing the polymer, and may shorten the useful life of the product. The use of flame retardants in polymers is usually a compromise between the desire for a particular degree of flame retardantancy and the need to detract as little as possible from the desirable properties of the polymer.

The primary flame retardants used in polymers are halogen containing compounds, most commonly bromine or chlorine containing compounds. Non-halogenated flame retardants such as magnesium hydroxide, aluminium trihydrate and ammonium phosphate have been used but high loading of these additives are required in order to achieve a satisfactory degree of flame retardancy. Antimony oxide is commonly used in combination with halogenated flame retardants, but its incorporation can significantly detract from the physical properties of the polymer, particularly if present in large amounts.

A wide variety of brominated flame retardants have been disclosed. A summary of those which are available commercially is given by Joseph Green in Rapra Review Report No.44 entitled "Flammability of Flame Retardants in Plastics" published by Rapra Technology in 1991. Green lists 62 products in Table 1, pages 12 to 15. At page 22 Green discloses that flame retardants used in polypropylene include BN-451 [ethylene bis (bromonorborane) dicarboximide], PE68 [bis dibromopropyl ether] and PB 370 [tris (tribromo neopentyl) phosphate].

The use of PB 370 as a flame retardant in polypropylene fiber is also disclosed by Green. Such fibers are potentially useful in the production of domestic products such as wall coverings, upholstery, carpets and clothing. These products desirably exhibit a high degree of flame retardance but are also required to retain their physical properties including, in particular, their visually attractive properties. The PB 370 is melt blendable in the polymer and thereby has less impact upon the appearance of the polymer. However, to achieve moderately acceptable flame retardant performance (a V-2 rating in the UL 94 test), the use of antimony trioxide in combination with the PB370 is required (Green suggests a polypropylene containing 3-5% by weight of PB370 and 1.5 to 2.5% by weight of antimony oxide will provide a V-2 rating) whilst V-0 can only be achieved in the presence of unacceptably high levels of antimony oxide.

There is therefore an ongoing need in the art to provide a more effective flame retardant which does not detract from the physical properties of the polymer into which it is incorporated.

### DISCLOSURE OF THE INVENTION

It has now discovered that the flame retardant effectiveness of a tris (trihaloneopentyl) phosphate such as PB370 in polyolefins may be increased by using it in combination with an alkoxyamine functional hindered amine light stabilizer. The hindered amine light stabilizers are known in the art. Polymeric compositions comprising them may have an Oxygen Index value which is 1 or 2 units higher than in their absence but they have no effect on the UL 94 test by which flame retardancy is commonly measured. Their ability to enhance the flame retardant effect of tris (trihaloneopentyl) phosphates is surprising.

USP 5393812 discloses flame retardant, light stable polyolefin compositions comprising a tris (trihaloneopentyl) phosphate ester flame retardant and a alkoxyamine functional hindered amine light stabiliser. The use of this combination of flame retardant and light stabiliser is stated to result in polyolefin compositions having improved (more lustrous) physical properties. There is no suggestion that the nature of the light stabiliser exerts any influence upon the flame retardant properties of the polyolefin.

Accordingly, this invention provides a novel use of an alkoxyamine functional hindered amine light stabiliser to improve the flame retardant properties of the polyolefin. In a preferred embodiment of the invention such stabilizer is present in a quantity sufficient to enhance the flame retardant activity of a tris (trihaloneopentyl) phosphate ester flame retardant.

The polyolefins useful in this invention (sometime also referred to as "polyolefin resins") may be derived from a variety of monomers especially from propylene, ethylene, butene, isobutylene, pentene, hexene, heptene, octene, 2 methyl propene, 2 methyl butene, 4 methyl pentene, 4 methyl hexene, 5 methyl hexene, bicyclo (2.2.1)-2-heptene, butadiene, pentadiene, hexadiene, isoprene, 2,3 dimethylbutadiene, 3,1, methyl pentadiene, 1,3,4 vinyl cyclohexene, vinyl cyclohexene, cylopentadiene, styrene and methyl styrene. The preferred polyolefins are polypropylene, polyethylene and copolymers of propylene and ethylene including atactic, syndiotactic and isotactic polypropylene, low density polyethylene, high density polyethylene, linear low density polyethylene, block copolymers of ethylene and propethylene, linear low density polyethylene, block copolymers of ethylene and propylene and random copolymers of ethylene and propylene. The invention finds particular application to polyolefins which are used in the production of fibers and fabrics where flame resistance and visual importance are significant considerations. Polypropylene and copolymers of propylene and ethylene are being increasingly used in these areas.

The flame retardant component of the compositions of this invention preferably comprise a tris (trihalo neopentyl) phosphate, especially a brominated and chlorinated phosphates. The flame retardant phosphate is preferably tris (trichloroneopentyl) phosphate, tris (chlorodibromoneopentyl) phosphate, tris (dichlorobromoneopentyl) phosphate or tris (tribromoneopentyl) phosphate also known as [tris (3-bromo-2,2 bis(bromomethyl)propyl) phosphate], or any combination thereof. The more preferred flame retardant is tris (tribromo neopentyl) phosphate. Suitable flame retardants comprising tris (tribromoneopentyl) phosphate are manufactured as Reoflam® PB370 by FMC Corporation and CR900 by the Daihachi Chemical Industries Corporation of Japan.

The alkoxyamine functional hindered amine light stabilizers which have been discovered to be useful in the compositions of this invention are known as additives to polyolefin and particularly to polypropylene based fibers and fabrics. Such fibers and fabrics conventionally contain at least one light stabilizer (usually a UV light stabilizer) and commonly at least one light absorber (usually a UV light absorber). The stabilizer and absorber are added to improve the stability of the product against degradation when exposed to strong sunlight. Other additives are also sold as light stabilizers useful in polyolefin resins, most notably the non alkoxyamine functional hindered amine light stabilizers. Only the alkoxyamine functional hindered amine light stabilizers have been found to be useful in enhancing the flame retardant activity of the tris (trihaloneopentyl) phosphate flame retardants pursuant to this invention.

A preferred alkoxyamine functional hindered amine light stabilizer useful in the composition of this invention is the compound having the formula I:

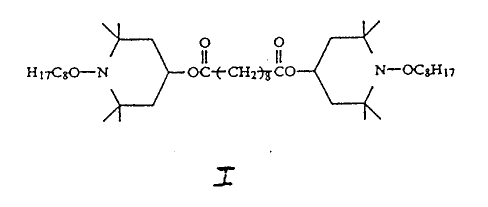

This stabilizer is manufactured and sold as Tinuvin® 123 by the Ciba-Geigy Corporation.

The compositions of the invention typically comprise from 1 to 10% parts by weight based on the weight of the polyolefin of the tris (trihaloneopentyl) phosphate flame retardant. The quantity employed will be that which is required to impart the desired degree of flame retardancy although this may need to be balanced against the need to maintain the properties of the polyolefin. The tris (trihaloneopentyl) phosphate will preferably be used in conjunction with antimony trioxide, sodium antimonate or antimony pentoxide. Flame retardant systems which combine a tris (trihaloneopentyl) phosphate with antimony trioxide, sodium antimonate or antimony pentoxide provide acceptable levels of flame retardancy when present in quantities which are acceptable in most applications. Typically, such compositions will comprise from 2 to 6% by weight of tris (trihaloneopentyl) phosphate and from 1 to 5% by weight of antimony trioxide or antimony pentoxide.

The amount of alkoxyamine functional hindered amine light stabilizer which is employed is generally in the range of from 0.05 to 5.0 % by weight of the polyolefin resin, preferably at least 0.2% by weight. The ratio of the weight of tris (trihaloneopentyl) phosphate flame retardant to the weight of alkoxyamine functional hindered amine light stabilizer with generally be in the range of from 1 : 1 to 10 : 1 and more preferably from 1 : 1 to 5 : 1. The use of larger proportions of the alkoxyamine functional hindered amine light stabilizer may not provide any improvement in the flame retardancy of the product. However, the incorporation of larger quantities of the alkoxy amine functional hindered amine light stabilizer may be desirable in order to provide a product having the desired degree of light stability.

The flammability of the polyolefin compositions may be determined using a variety of techniques. Two of the most common test procedures are the Oxygen Index Test and the Underwriters Laboratory (UL) Subject 94 test.

The Oxygen Index Test (ASTM d-2863) employs a vertical glass tube 60 cm high and 8.4 cm in diameter in which a rod or strip specimen is held vertically by a clamp at its bottom end. A mixture of oxygen and nitrogen is metered into the bottom of the tube, passing through a bed of glass beads at the bottom to smooth the flow of the gas. The sample is ignited at its upper end with a hydrogen flame, which is then withdrawn, and the sample burns like a candle from the top down. The atmosphere that permits steady burning is determined. The limiting oxygen index or simply oxygen index is the minimum fraction of oxygen in an oxygen-nitrogen mixture which will just sustain burning for 2 inches or 3 minutes whichever comes first.

In the Underwriters Laboratory (UL) - Subject 94 vertical burn test a sample (5.0 x 0.05 inches) is exposed vertically to a bunsen flame for 10 seconds. The sample is ignited at the bottom and burns up. If the specimen self-extinguishes within 30 seconds another 10 second application is made. Flaming droplets are allowed to fall on dry absorbent surgical cotton located 12 inches below the sample. If the average burning time is less than 5 seconds and the drips do not ignite the cotton the material is classified 94V-0. If the time is less than 25 seconds and the drips do not ignite the cotton the material is classified 94V-1. If the sample is extinguishing but the cotton is ignited the material is classified as 94V-2.

In these tests the majority of applications require that the composition should provide at least a V-2 rating in the UL 94 test. The majority of applications do not specify a minimum figure for the oxygen index of the composition. The oxygen index as determined in these tests provides a quantitative measure of the flame resistance of the compositions tested. In general the incorporation of from 3 to 5 % by weight of a tris(trihalo neopentyl) phosphate and from 1.5 to 2.5 % by weight of antimony oxide into the polyolefin is sufficient to achieve a V-2 rating. In order to achieve a V-0 rating it has previously been necessary to use large quantities of other flame retardants such as Dechlorane Plus or Decabromophenyl Oxide or to increase the amount of antimony compound to an unacceptable level. The compositions of this invention may achieve a dripping V-0 rating in the UL-94 test by incorporating from 0.2 to 3.0 parts by weight of an alkoxy amine functional hindered amine light stabilizer in addition to the tris (trihalo neopentyl) phosphate and the antimony oxide. The resulting compositions offer advantages in terms of improved physical properties of the polyolefin resin; together with a high degree of flame retardance and incidentally provide compositions having a degree of light stability by virtue of the presence of the alkoxy amine functional hindered amine light stabilizer.

Polyolefin and especially polypropylene fibers having these improved properties are extremely desirable in the art.

A single alkoxyamine functional hindered amine, or two or more alkoxyamine func,ational hindered amines in combination, may be employed as the light stabilizer component. Alternatively, one or more alkoxyamine functional hindered amines may be used in combination with one or more other - i.e., nonalkoxyamine functional hindered amine light stabilizers.

Particularly preferred as the light stabilizer components of the invention are these whose inclusion, in the compositions of the invention, provide a degree of resistance to degradation by UV Light (i.e. a UV light stability) such that after exposure to radiation, according to one of the standards as set forth below, the composition especially, in the form of fiber or other textile structure, has a tenacity retention of at least 50%, or at least about 50%. More preferably, this tenacity retention is at least 75% or at least 75% most preferably, at least 90% or at least about 90%.

Regarding the immediately foregoing reference to standards for radiation treatment, one such applicable standard, for the level of exposure, is 200 hours of carbon arc radiation, under the conditions set for the either in AATCC Test Method 16A-1990 or in ASTM G23-90. Of these two test methods, AATCC Test Method 16A-1990 is preferred, although either is suitable for this purpose.

As a more stringent standard, exposure may be to 639 kJ/m² of UV radiation under the conditions set forth in Test Method SAE J-1885, 1987-08. This more stringent standard is particularly suitable for certain types of the textile structures, e.g., the nonwoven structures, such as the needled felts, especially those with automotive, marine and related applications.

In any event, combinations of alkoxyamine functional hindered amine and nonalkoyamine functional hindered amine as well alkoxyamine functional hindered amine alone, which whatever the standard of radiation exposure employed meet the indicated level of tenacity retention, are within the scope of the invention. In such instances where more than one hindered amine is employed, whether multiple alkoxyamine functional hindered amines alone or one or more alkoxyamine functional hindered amines in combination with one or more nonalkoxyamine functional hindered amines, the relative proportions of the different compounds to be used for accomplishing the intended results of the invention, can be readily determined without undue experimentation, by those of ordinary skill in the art.

Particularly where both one or more alkoxyamine functional hindered amines, and one or more nonalkoxyamine functional hindered amines, are employed the weight ratio, of alkoxyamine functional hindered amine to nonalkoxyamine functional hindered amine, preferably ranges from 1:5 or about 1:5, to 5:1 or about 5:1; more preferably this weight ratio is between 1:3 or about 1:3, and 3:1 or about 3:1. As a matter of particular preference, the weight ratio, of alkoxyamine functional hindered amine to nonalkoxyamine functional hindered amine, is from 1:2 or about 1:2 to 2:1 or about 2:1.

The nonalkoxyamine functional hindered amine light stabilizers which may be used are those which, in conjunction with alkoxyamine functional hindered amine will provide the indicated results.

One such hindered amine light stabilizer is that of the formula II : 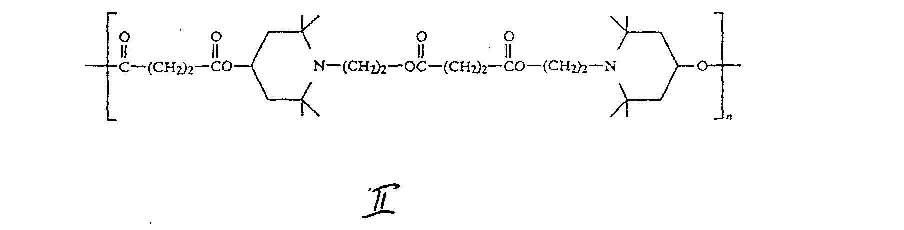 having a number average molecular weight (Mₙ) of at least about 2500. This stabilizer is commercially available as Tinuvin® 622 from Ciba-Geigy Corporation.

Another is that of the formula III:

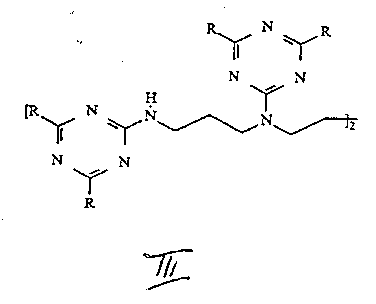

This stabilizer is commercially available as Chimassorb™ 119 from Ciba-Geigy Corporation.

Yet another stabilizer is that of formula IV: 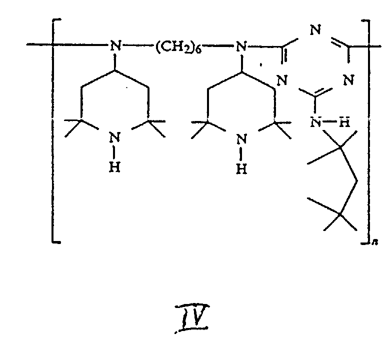 having a number average molecular weight (Mₙ) of at least about 2500. This stabilizer is commercially available as Chimassorb ™ 944, from Ciba-Geigy Corporation.

Still another is that of the formula V:

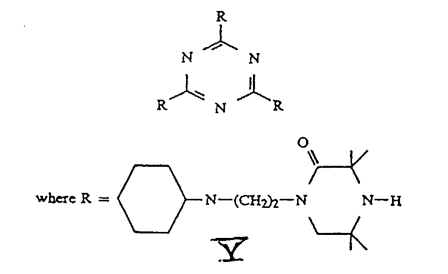

This stabilizer is commercially available as Good-Rite ™ 3150, from the B.F Goodrich Company, Brecksville, Ohio.

Still another is polymethyl propyl 3-oxy[4(2,2,6,6-tetramethyl)piperidinyl] siloxane. This stabilizer is commercially available as Uvasil 299-LM, from EniChem Synthesis SpA, Milano, Italy.

The suitable UV light absorbers include such components which serve the intended purpose of UV light absorption, and are compatible with the compositions of the invention, without interfering with their intended properties and functions. The benzotriazole and hydroxybenxoate light absorbers are examples of those which can be employed among these are 2-3',5'-bis(1-mthyl-1-phenylethyl)-2-hydroxyphenyl) benzotriazole which is commercially available as Tinuvin ®234, from Ciba-Geigy Corporation, and 2,4-di-tert-butylphenyl 3,5-di-tert-butyl-4-bydroxybenzoate, which is commercially available as UV-CHEK ®AM-340 from Ferro Corporation, Bedford, Ohio.

The amount of UV light stabilizer whether alkoxyamine functional hindered amine alone, or in combination with other stabilizers, such as one or more of those discussed above, is preferably from 0.01 percent or about 0.01 percent to 3 percent, or about 3 percent by weight of the composition. A more preferred range is between 0.2 percent, or about 0.2 percent, and 1 percent or about 1 percent or about 0.2 percent and 1 percent or about 1 percent by weight of the composition.

The flame retardancy of the compositions of this invention varies with the nature of the polyolefin resin. The nature of the polymer, its molecular weight, density, melting point and melt index may all affect the flame retardancy of the composition.

A wide variety of polyolefin resins are manufactured and sold as articles of commerce and any of them can be used in the compositions of this invention. Examples of commercially available polyolefins which can be used include polypropylenes such as those sold under the trademark PROFAX. The compositions of this invention may comprise other conventional additives. In particular they may incorporate coloring agents in the form of dyes or pigments, melt stabilizers such as phosphites, heat stabilizers such as inorganic salts and phosphites, antistatic agents such as glycol compounds, and extrusion aids such as silicones. In addition, where the compositions take the form of fibers, appropriate coating agents may be added to improve the appearance of the fiber. All of these additives are well known in the art and a range of all of these various additives are commercially available. These additives generally comprise only a minor proportion of the composition.

The presence of certain of these additives may enhance the flame retardance (FR) performance of the compositions. In particular, the presence of inorganic salts appears to enhance the FR performance of the compositions of this invention. Examples of such salts include heat stabilizers such as calcium stearate and tin salts such as dibutyl tin maleate. Other salts may be added to improve the FR performance but in general it is preferred to use a salt which is already known to be a useful component of polyolefin resin compositions. These salts generally comprise from 0.01 to 1.0 % by weight of the composition.

The compositions of the invention can be processed into a variety of forms using a variety of manufacturing processes. In general the polyolefin may be purchased in the form of granules which are melted prior to being formed by, e.g., extrusion processes or by molding processes. The flame retardant, the alkoxy amine functional hindered amine light stabilizer and any other additive may bea added to the granules or to the melt. In a variation some or all of the additives may be added in relatively large concentrations to molten polyolefin and the melt cooled and granulated. The resulting granules may then be added to a bulk of the polyolefin in a quantity sufficient to provide the desired concentration of the additives in the polyolefin product. Other modes of combining the polyolefin, fame retardant and light stabilizer will be apparent. In cases, for example, where a polyolefin has previously been flame retarded by addition of the tris(trihaloneopentyl) phosphate, the polyolefin composition may be remelted and amounts of the light stabilizer added to enhance the flame retardance, or the amount of stabilizer may be increased by new additions.

The compositions of this invention find use in a variety of applications. The degree of flame resistance and /or of light stability may vary with the application. In particular, the compositions may be molded to form shaped parts useful in a variety of applications some of which may only require a V-2 rating in the UL-94 test in order to be useful. In other applications, notably fiber applications, the requirements for flame retardancy are more stringent. The compositions of this invention thus may be used to form fibers, coatings, films, textile structures (i.e. fabrics), molded products, sheets, plastics of all types, and the like, in accordance with their intended function. In this regard, fibers are understood as encompassing both cut and uncut fibers and filaments, including continuous filaments.

Further in this regard, textile structures are understood as encompassing all manner of fabric including woven, nonwoven, knitted and tufted fabrics. As repeatediy noted herein, preferred forms are the fibers and textile structures prepared from fibers particularly with respect to the earlier discussed component weight proportion ranges and values concerning flame retardancy, UV light stability and luster.

The compositions of the invention, particularly the fibers and the textile structures made therefrom, may be prepared by conventional techniques with the use of conventional equipment. Specifically with respect to the fibers and textile structures, standard means for effecting extrusion and subsequent processing may be employed.

As one appropriate method, the polyolefin, tris (trihaloneopentyl) phosphate ester flame retardant and alkoxyamine functional hindered amine light stabilizer and any additional components which may be included e.g., UV light absorber, may be mechanically blended such as by dry mixing, before being fed to the extruder. Alternatively, they can simply be fed to the extruder without such prior blending.

In the extruder, the components are subjected to blending, melting, and heating, then extruded therefrom, in the form of filaments. Such extrusion, with the subsequent processing may be effected by short spin or long spin as well as using one step or two step procedures. In this regard, it is understood that the terms "short spin", "long spin", "one step", and "two step" are all used herein, in accordance with their commonly understood meanings in the art, and that pursuant to such usage, each of the short spin and long spin may be conducted in either one or two steps.

Consistent with the foregoing, where long spin is employed, filaments from the spinnerette of the extruder fall through a comparatively extensive chimney before being taken up. In this chimney, cooling is effected by passage of air over the filaments. For short spin, there is less distance between spinnerette and takeup, because the means employed for effecting cooling by passage of air, do not require as much space to obtain the desired result, as is necessary for long spin.

In the two step process, extrusion and the subsequent processing (i.e. drawing and whatever further optional treatment may be employed, such as crimping and/or cutting to obtain staple fiber, or texturing to obtain a bulked continuous filament (BCF)fiber) are conducted as separate steps. Specifically the cooled filaments are wound, on a bobbin, in the undrawn state, and them subjected to the indicated processing.

By contrast, in the one step process, extrusion and processing are effected in a continuous operation. The cooled fibers are collected on a moving cylinder, then immediately subjected to drawing, and subsequently to any of the indicated additional optional treatments.

As previously noted, both long spin and short spin may each be utilised, for either the one step or two step processes. However, as a matter of preference, for cut staple fiber, long spin is employed in conjunction with the two step process and short spin, with the one step process. For continuous filament (CF) or (BCF) fibers, long spin is used in both one step and two step processes.

Filaments and fibers of the invention may be drawn or undrawn, continuous or cut (i.e. staple), texturized or untexturized (e.g. crimped or uncrimped), coloured or uncoloured. With reference to terms commonly understood in the art, the continuous filaments may be provided, e.g., in the form of partly oriented yarn (POY) fully oriented yarn (FOY), continuous filament (CF) and bulked continuous filament (BCF) with conventional techniques being suitable for obtaining these forms. Further, filaments and fibers of the invention may be drawn to whatever finesse is appropriate for the intended purpose. Preferably, drawing is effected to provide a fiber size in the range of from 2, or about 2 to 25 or about 25, denier per filament (dpf).

Correspondingly, filaments and fibers of the invention may be combined into bundles having whatever total yarn denier is appropriate for the intended purpose. In a preferred embodiment, they are combined into bundles having a total yarn denier of 50, or about 50 to 30,000 or about 30,000.

Staple fibers of the invention may be used to prepare textile structures, likewise an embodiment of the invention. In this regard, such fibers can be made into webs, preferably by carding further, by use of any of the other known commercial processes, including those employing mechanical, electrical, pneumatic, or hydrodynamic mean for assembling fibers into a web e.g. airlaying, carding/hydroentangling,wetlaying, hydroentangling and spunbonding (i.e., meltspinning of the fibers directly into fibrous webs by a spunbonding process) - can also be appropriate for this purpose. The loosely carded fiber may be appropriately needled, into nonwoven felt fabric.

Staple fibers of the invention may also be carded and spun into yarns, using a cotton, worsted or woollen system yarn manufacturing process. These spun yarns and the CF and BCF fibers of the invention can be converted to textile structures, likewise of the invention. In this regard, such fibers can be made into fabrics by the commercially known processes of tufting, knitting and weaving.

Fibers and textile structures of the invention are suitable for a variety of uses - including, but not limited to upholstery, carpets, window furnishings (e.g. draperies, casings, linings, blinds), wall covering, panel cloth, automotive, aircraft, and truck interior fumishing (e.g. trim fabrics, upholstery, load floor and carpet), and marine and recreation vehicle fabrics.

The invention is illustrated by the following examples. Throughout this specification and the appended claims, all parts and percentages are by weight based on total polyolefin composition weight, and all tempertures are centigrade, unless otherwise indicated.

### Example 1

Blends of polypropylene (Profax 6323) with Reoflam PB-370 flame retardant, antimony trioxide, Tinuvin 123 UV light stabilizer, Tinuvin 234 UV absorber and heat stabilizers were compounded in a Haake twin screw extruder and molded in a 35 ton Battenfeld injection molding machine. 1/16" (1.6mm) bars were molded and submitted to UL testing and Oxygen Index (Ol) testing. The melt index (Ml) of the polypropylene used was 12. The results are reported in Table 1. It is apparent from the results of the Table that the combination of PB-370 and antimony renders polypropylene flame retardant, as expected. However, an unexpected increase in flame retardant (FR) efficiency, as measured by both the oxygen index method and the UL Vertical Burn test protocol, is observed when Tinuvin 123 is incorporated in these formulations. A further enhancement is provided by the incorporation of heat stabilizers which allow the composition to reach an Ol of 29-29.5 and exhibit dripping VO characteristics. The heat and light stabilisers on their own (without the PB-370) show no FR activity in polypropylene.

### Example 2

To test the dependence of these results on the melt flow and overall rheology of the base polypropylene resin used, the formulations of Example 1 were retested using a polypropylene of Ml=30 g/10min. Again the combination of Tinuvin 123 with PB-370 gave an unexpected increase in FR activity as measured by both the Oxygen Index and the UL vertical burn test. The stabilizers without the PB-370 have no FR activity. The level of Tinuvin 123 used was 0.5%, with 5% PB-370 and 2.5% antimony.

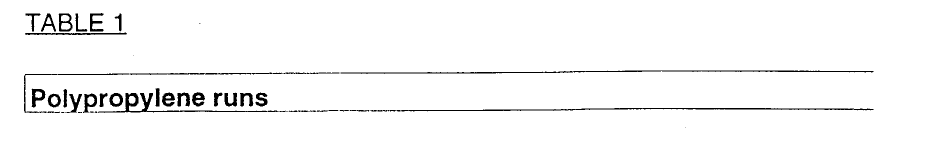

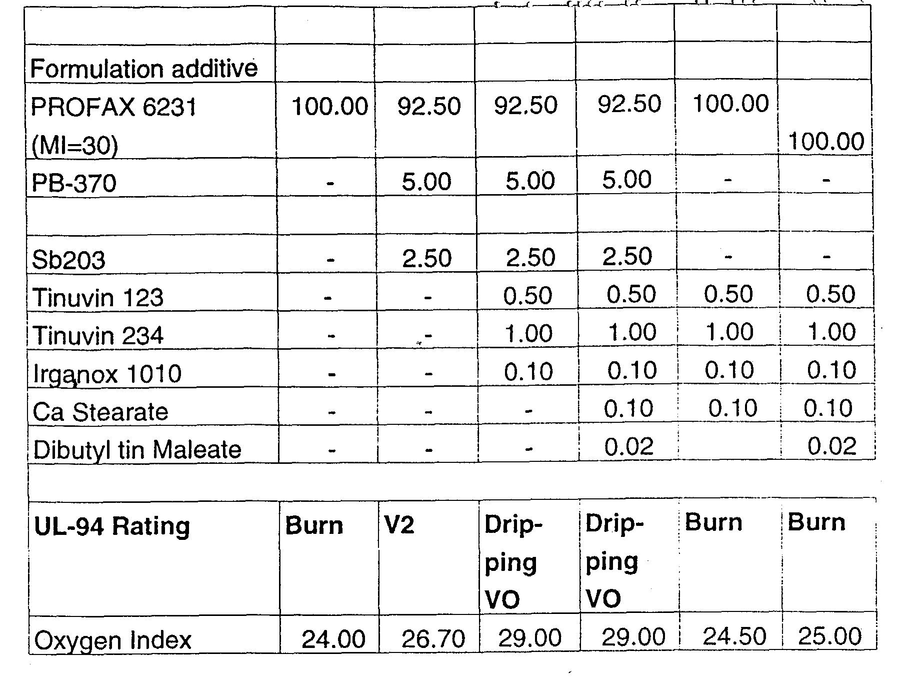

**TABLE 2**

| **Polypropylene runs** | | | | | | |
|---|---|---|---|---|---|---|
| | | | | | | |
| Formulation additive | | | | | | |
| PROFAX 6323 | 100.00 | 92.50 | 100.00 | 92.50 | 92.50 | |
| (MI=12) | | | | | | 100.00 |
| PB-370 | - | 5.00 | - | 5.00 | 5.00 | - |
| | | | | | | |
| Sb203 | - | 2.50 | - | 2.50 | 2.50 | - |
| Tinuvin 123 | - | - | 0.50 | 0.50 | 0.50 | 0.50 |
| Tinuvin 234 | - | - | 1.00 | 1.00 | 1.00 | 1.00 |
| Irganox 1010 | - | - | 0.10 | 0.10 | 0.10 | 1.00 |
| Ca Stearate | - | - | - | - | 0.10 | 1.00 |
| Dibutyl tin Malate | - | - | - | - | 0.02 | 0.02 |
| | | | | | | |

| **UL-94 Rating** | **Burn** | **V2** | **Burn** | **V2** | **Driping V0** | **Burn** |
|---|---|---|---|---|---|---|
| Oxygen Index | 24.00 | 26.50 | 24.50 | 28.0 | 29.50 | 25.00 |

### Example 3

A third set of polypropylene fibers were prepared and their oxygen index value measure. The results are present in Table 3.

**TABLE 3**

| | | | | | | | | | | | |
|---|---|---|---|---|---|---|---|---|---|---|---|
| Profax 6301* | 100 | 97.0 | 97.0 | 99.0 | 99.5 | 96 | 96 | 96 | 96 | 95.5 | 96.0 |
| PB370 | | 3.0 | | | | 3.0 | 3.0 | 3.0 | 3.0 | 3.0 | 3.0 |
| Tinuvin 123 | | | 1.0 | | | 1.0 | | | | 1.0 | 0.5 |
| Tinuvin 622 | | | | | | | 1.0 | | 0.5 | | 0.5 |
| Chimasorb 119 | | | | 1.0 | | | | 1.0 | 0.5 | | 0.5 |
| Tinuvin 234 | | | | | 0.5 | | | | | 0.5 | |
| Oxygen Index | 34.1 | 30.0 | 29.6 | 24.6 | 23.8 | 34.1 | 29.3 | 29.8 | 28.4 | 33.7 | 33.8 |

| | | | | | | | | | | | |
|---|---|---|---|---|---|---|---|---|---|---|---|
| * Base formulation comprising 1000ppm FS30 a phenol free process stabiliser and 500ppm calcium stearate. | | | | | | | | | | | |

### Example 4

A fourth set of fibers were produced using Profax 6301 as the polypropylene resin and higher loadings of PB370. The results are given in Table 4.

**TABLE 4**

| | | | | | | | | |
|---|---|---|---|---|---|---|---|---|
| Profax 6301* | 94.75 | 94.75 | 94.75 | 94.75 | 94.75 | 95.0 | 99.75 | 99.75 |
| PB 370 | 5.0 | 5.0 | 5.0 | 5.0 | 5.0 | 5.0 | | |
| Tinuvin 123 | 0.25 | | | 0.125 | | | 0.25 | |
| Tinuvin 622 | | 0.25 | | 0.125 | 0.125 | | | |
| Chimasorb 119 | | | 0.25 | | 0.125 | | | 0.25 |
| Oxygen Index | 35.0 | 29.7 | 31.0 | 35.0 | 29.8 | 30.1 | 27.1 | 23.2 |

## Claims

1. The use of a alkoxyamine functional hindered amine light stabiliser to improve the flame retardant properties of a polyolefin.

2. A use according to claim 1 characterised in that the polyolefin is a polypropylene.

3. A use according to either of the preceding claims characterised in that the polyolefin comprises a tris (trihaloneopentyl) phosphate ester.

4. A use according to claim 3 characterised in that the polyolefin comprises a tris (trihaloneopentyl) phosphate selected from the group comprising tris (tribromoneopentyl) phosphate, tris (trichloroneopentyl phosphate, tris (chloro dibromoneopentyl) phosphate and tris (dichlorobromoneopentyl) phosphate.

5. A use according to either of claims 3 or 4 characterised in that the polyolefin comprise tris (tribromoneopentyl) phosphate.

6. A use according to any of claims 1 to 5 characterised in that the polyolefin comprises from 1.0 to 10% by weight of the tris (trihaloneopentyl) phosphate.

7. A use according to claim 6 characterised in that the polyolefin comprises from 2.0 to 6.0% by weight of the tris (trihaloneopentyl) phosphate.

8. A use according to any of the preceding claims characterised in that the alkoxyamine functional hindered amine light stabiliser comprises a compound having the formula:

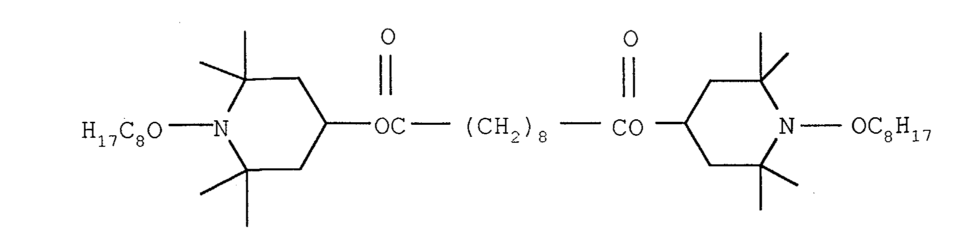

9. A use according to any of the preceding claim characterised in that the amount of alkoxyamine functional hindered amine light stabiliser comprises 0.05 to 5.0 percent by weight of the polyolefin resin.

10. A use according to any, of the preceding claims characterised in that the polyolefin comprises a polyethylene.

11. A use according to any of claims 1 to 9 characterised in that the polyolefin comprises an ethylene/propylene block copolymer.

12. A use according to any of the preceding claims characterised in that the polyolefin further comprises a non-halogenated flame retardant selected from the group comprising antimony trioxide, sodium antimonate and antimony pertoxide.

13. A use according to any of the preceding claims characterised in that the amount of alkoxyamine functional hindered amine light stabiliser is at least 0.2% by weight of the polyolefins.

14. A use according to any of claims 3 to 13 characterised in that the ratio of the weight of the tris (trihaloneopentyl) phosphate to the weight of alkoxyamine functional hindered amine light stabiliser is in the range 1:1 to 10:1.

15. A use according to claim 14 characterised in that the ratio is in the range 1:1 to 5:1.

16. A use according to any of the preceding claims characterised in that the polyolefin further comprises a non-alkoxyamine functional hindered amine light stabiliser.
